# FASCICULE DE BREVET EUROPEEN

(11) **EP 2 721 367 B1**
(45) Date de publication et mention de la délivrance du brevet: **29.04.2015**
(21) Numéro de dépôt: 12719006.4
(22) Date de dépôt: 04.05.2012
(51) Int. Cl.: F42B 33/06

(54) **PROCEDE ALTERNATIF DE DEMANTELEMENT DE MOTEURS A PROPERGOL SOLIDE**
ALTERNATIVES VERFAHREN ZUM ZERLEGEN VON FESTTREIBSTOFFMOTOREN
ALTERNATIVE METHOD FOR DISMANTLING SOLID-PROPELLANT MOTORS

(30) Priorité: 15.06.2011 FR 1155213
(43) Date de publication de la demande: 23.04.2014
(73) Titulaire: ROXEL France, 33167 Saint-Medard en Jalles Cedex (FR)
(72) Inventeur: MAILLET, Didier, F-33167 Saint-Medard en Jalles Cedex (FR); DOUAIS, Christophe, F-33167 Saint-Medard en Jalles Cedex (FR); RUMEAU, Nicolas, F-33167 Saint-Medard en Jalles Cedex (FR); LEVEQUE, Dominique, F-33167 Saint-Medard en Jalles Cedex (FR)
(74) Mandataire: Collet, Alain
(86) Numéro de dépôt international: PCT/EP2012/058293
(87) Numéro de publication internationale: WO 2012/171718

(56) Documents cités:
- WO-A1-2011/021969
- FR-A1- 2 824 901
- GB-A- 2 267 955

## Description

L'invention concerne le domaine du démantèlement principalement de propulseurs à propergol solide, en particulier des moteurs équipant des engins propulsés arrivés en fin de vie opérationnelle et devant faire l'objet d'un retrait des théâtres opérationnels et des capacités de stockage. L'invention couvre également le domaine d'activité consistant à de simples remotorisations des engins propulsés.

Elle concerne en particulier le domaine des moyens permettant de démanteler de tels propulseurs avec une cadence de démantèlement élevée, dans le respect des règles élémentaires de sécurité et des règles relatives à la protection de l'environnement. Un tel moyen est connu de WO 2011/021969 A1.

Un propulseur à propergol solide est généralement constitué d'un corps extérieur cylindrique, plus communément dénommé corps de propulseur, borgne ou débouchant sur ses deux extrémités, au sein duquel sont déposés des matériaux de liaison, protection thermique et liner, permettant le maintien en place du propergol solide à l'intérieur du corps. Le propergol solide constitue le matériau dont la combustion génère des gaz dont l'éjection par la tuyère est responsable de la propulsion de l'engin sur lequel le propulseur est intégré.

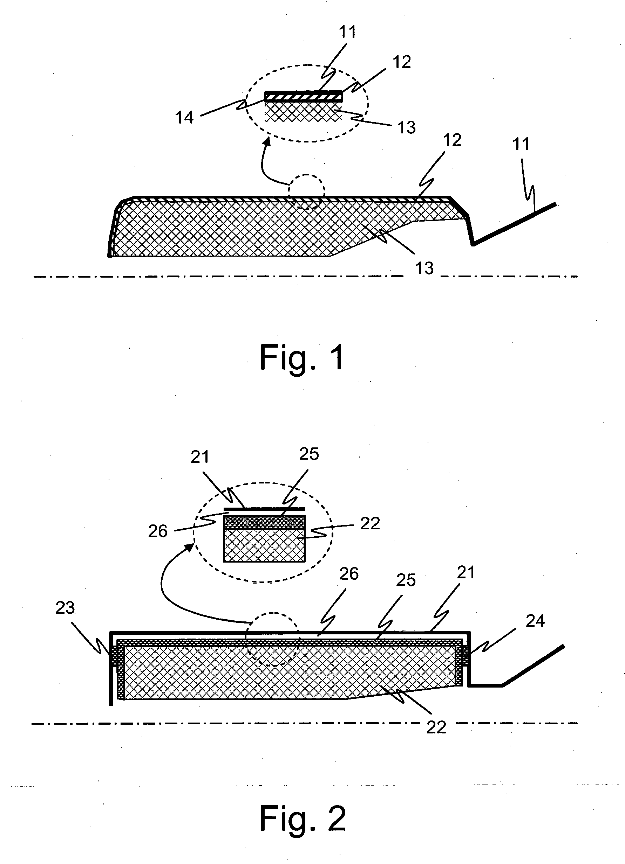

De manière connue, dans un propulseur à propergol solide, comme décrit ci-dessus, le combustible peut présenter deux architectures distinctes, l'une dénommée "moulé collé", illustrée par la figure 1, pour laquelle le propergol 13 est solidaire du corps de propulseur 11 et de son revêtement de protection thermique 12 au travers de liaisons structurales assurées par le liner 14, l'autre dénommée "libre", illustrée par la figure 2, pour laquelle le chargement de propergol 22, préalablement réticulé et inhibé, est maintenu en place au sein du corps de propulseur 21 par des cales 23 et 24 définissant un interstice 26.

Le démantèlement d'un propulseur à propergol solide, c'est à dire sa mise hors service définitive, consiste généralement à réduire celui-ci à une configuration telle que la fonction pour laquelle il a été conçu, à savoir la propulsion, et donc la combustion du propergol, ne puisse plus être assurée. La raison principale du démantèlement est la sécurité des biens, et surtout des personnels, pouvant se trouver en présence de ce propulseur même après sa mise à la réforme.

La procédure de démantèlement adoptée, ainsi que les moyens mis en oeuvre, répondent généralement à des exigences diverses, telles que la simplicité des manoeuvres exécutées, ou la garantie de sécurité pyrotechnique (non propagation des effets). Ils doivent en outre être en adéquation avec les cadences de démantèlement imposées, c'est-à-dire avec la quantité de propulseurs à traiter durant une période donnée.

L'état de l'art propose plusieurs procédés de démantèlement, qui ne permettent cependant pas de répondre à des exigences élevées en matière de cadences de traitement, ni en matière de simplicité de mise en oeuvre. Par simplicité de mise en oeuvre, on entend en particulier l'absence d'opération de découpe du corps de propulseur ou de vidange de propergol par un quelconque procédé.

Le brevet US 5 220 107 délivré à la société United Technologies Corporation le 15/06/1993 fait en particulier référence à la fragmentation d'un chargement de propergol nu, par refroidissement à très basse température du chargement et emploi d'un broyeur ou d'une presse pour le fragmenter.

Le brevet US 5 025 632 délivré à la société General Atomic le 25/06/1991 propose de réaliser l'extraction du propergol d'un propulseur moulé collé présentant un canal central, au moyen d'un jet de liquide cryogénique. Un tel procédé, dérivé du principe de couteau hydraulique, est connu pour engendrer des temps de cycles industriels non négligeables et n'est donc pas compatible de cadences de démantèlement élevées.

Le brevet US 5 552 093 délivré à David E. Lee le 03/09/1996 revendique quant à lui un procédé d'extraction du propergol d'un propulseur à architecture moulé collé, consistant à immerger totalement le corps de propulseur dans l'azote liquide, tandis que le chargement est fragmenté par application de chocs répétés. Outre son caractère onéreux, un tel procédé ne peut en outre pas être considéré comme satisfaisant du point de vue de la sécurité pyrotechnique, le propergol endommagé (fissuré par exemple) présentant généralement une sensibilité accrue à certaines agressions du type choc.

Le brevet FR 03 08474 délivré à la société SNPE Matériaux Energétiques le 19/08/2005 décrit un procédé de démantèlement basé sur la réalisation successive d'étapes de découpe de tronçons de propulseurs et de vidange cryogénique du propergol contenu dans chaque tronçon, les fragments de propergol subissant, après une éventuelle opération de broyage, une opération finale de traitement consistant en un traitement biologique des résidus perchloratés constituant les effluents liquides (dissouts), résidus qui ont été préalablement débarrassés des espèces organiques et métalliques (non solubles) entrant dans la composition d'un propergol composite.

Un tel procédé présente cependant un temps de cycle important. Il constitue en outre une solution coûteuse dans la mesure où il fait appel à de nombreuses opérations de découpe et de vidange. Il est par ailleurs d'une mise en oeuvre relativement complexe car il fait appel pour le recyclage du propergol à une technologie mettant en oeuvre des organismes vivants (population de bactéries) dont l'activité conditionne l'efficacité du traitement. Il est en outre, du fait de son caractère biologique (utilisation d'organismes vivants), très difficile à maitriser, ce qui peut représenter de fortes contraintes dans le cadre de cadences de démantèlement élevées.

Un tel procédé mettant en oeuvre des traitements de type biologique présente par ailleurs des limites d'utilisation, dans la mesure où il n'est, à ce jour, adapté qu'au traitement de composés chimiques solubles dans l'eau tels que le perchlorate d'ammonium, charge oxydante majoritairement employée dans la production des propergols composites. Par suite il ne peut être mis en oeuvre pour assurer le démantèlement de propergols solides "double base" classiques (SD et Epictètes) ou de propergols avancés tels que les XLDB, NEPE Azorgols. Il ne répond donc pas, en particulier, à la problématique de démantèlement des propulseurs de missiles tactiques dont la plupart, pour des raisons de discrétion, intègrent des technologies de propergols homogènes.

Un but de l'invention consiste à proposer un procédé de démantèlement alternatif, compatible du plus grand nombre possible de type de propulseurs à propergol solide utilisés, en particulier ceux employés dans le domaine des missiles tactiques, et permettant une simplification des opérations de démantèlement et un raccourcissement du laps de temps nécessaire à ce démantèlement.

A cet effet l'invention a pour objet un procédé pour réaliser le démantèlement de propulseurs à propergol solide, le procédé consistant, pour chaque propulseur à démanteler, à mettre en marche le propulseur de façon à consumer la totalité du propergol qu'il renferme, puis à procéder au démontage de la structure proprement dite du corps du propulseur. Selon une caractéristique essentielle de l'invention, la mise en marche du propulseur et la combustion du propergol sont réalisées alors que le propulseur est monté sur un banc d'essais statiques et immergé dans un bassin rempli d'eau.

Dans un mode de mise en oeuvre préféré, le procédé selon l'invention met en oeuvre de manière répétitive une séquence principale comportant les étapes suivantes:
Une première étape consistant à monter un propulseur (41) sur un banc d'essais statiques assurant le maintien du propulseur en position fixe;
Une deuxième étape durant laquelle on immerge le banc d'essais statiques, équipé du propulseur à démanteler, au fond d'un bassin rempli d'eau;
Une troisième étape de mise en service du propulseur, durant laquelle le propergol se consume au fond du bassin;
Une quatrième étape consistant, après combustion complète du propergol, à sortir de l'eau le banc d'essais statiques et à démonter le propulseur du banc d'essai;
Une cinquième étape consistant à rincer le corps du propulseur pour en extraire les résidus de combustion solides qui adhèrent encore aux parois internes du corps du propulseur;
Une sixième étape consistant à démonter le corps du propulseur vide de propergol.

Selon une forme de mise en oeuvre particulière, pour laquelle le banc d'essai utilisé permet de loger plusieurs propulseurs, il met en oeuvre de manière répétitive une séquence principale comportant les étapes suivantes:
Une première étape consistant à monter des propulseurs sur le banc d'essais statiques;
Une deuxième étape durant laquelle on immerge le banc d'essais statiques, équipé des propulseurs à démanteler, au fond d'un bassin rempli d'eau;
Une troisième étape de mise en marche des propulseurs, les propulseurs étant mis en marche simultanément ou l'un après l'autre;
Une quatrième étape consistant, après mise en marche de l'ensemble des propulseurs montés sur le banc d'essais statiques, à sortir le banc d'essais statiques de l'eau et à démonter les propulseurs du banc d'essai;
Une cinquième étape consistant à rincer le corps de chaque propulseur pour en extraire les résidus de combustion solides qui peuvent encore y adhérer;
Une sixième étape consistant à démonter les corps de propulseurs vides de propergol.

Selon une autre forme de mise en oeuvre particulière, le procédé selon l'invention utilise un banc d'essais statiques comportant un dispositif type barillet permettant de loger plusieurs moteurs et d'exécuter une mise en marche séquentielle des moteurs montés sur le banc.

Dans un mode de mise en oeuvre préféré, le procédé selon l'invention exécute de manière répétitive la séquence principale de démantèlement, de façon à démanteler l'ensemble des propulseurs dont le démantèlement est requis. Chaque exécution de la séquence principale est suivie d'un test consistant à déterminer si la teneur de l'eau du bassin d'immersion en produits de combustion et la quantité de produit de combustion insolubles déposés au fond du bassin d'immersion permettent d'exécuter une nouvelle séquence de démantèlement.

Dans une forme particulière du mode de mise en oeuvre précédent, on exécute, dans le cas où le test est négatif, une étape de récupération et de tri des produits insolubles déposés au fond du bassin d'immersion ainsi qu'une étape de traitement d'épuration de l'eau de ce bassin.

Dans une forme particulière du mode de mise en oeuvre précédent, l'étape de récupération et de tri des produits insolubles est suivie d'opérations de recyclage de ces produits et l'étape de traitement d'épuration de l'eau du bassin d'immersion est suivie d'une opération de recyclage des produits en solution.

Dans un mode de mise en oeuvre particulier du procédé selon l'invention adapté au cas où le bassin d'immersion étant associé à des moyens d'aspiration d'air disposés au dessus de la surface libre de l'eau du bassin, l'étape de mise en marche des propulseurs, assure également la mise en marche des moyens d'aspiration, ces moyens étant mis à l'arrêt après l'arrêt de fonctionnement du dernier propulseur durant cette étape.

L'invention consiste donc dans le développement d'un procédé alternatif, procédé issu du retour d'expérience accumulé dans la caractérisation, sur banc d'essais statiques immergé en piscine, de propulseurs à propergol solide dédiés à la propulsion de dispositifs sous-marins de missiles de croisière.

Avantageusement, le procédé alternatif présenté dans la suite du texte permet d'obtenir une cadence journalière de traitement élevée. Il présente en outre les caractéristiques suivantes :
- absence d'opérations sensibles d'un point de vue de la sécurité pyrotechnique: Le procédé ne comporte en particulier pas, avant traitement, d'opérations telles que le démontage d'allumeurs et de tuyères ni d'opérations de découpe de tronçon de propulseurs et de vidange de propergol, le propulseur étant détruit dans une configuration identique à celle de sa livraison par le propriétaire initial, après les opérations de dégroupage de la munition (retrait de la tête militaire),
- maîtrise des effets d'une combustion mal contrôlée (effets thermiques, éclats,..., etc.) en cas d'évènements pyrotechniques imprévu,
- compatibilité avec les architectures à chargement moulé collé aussi bien qu'avec les architectures à chargement libre,
- compatibilité avec une très large gamme de matériaux énergétiques (propergols solides) correspondant aux diverses architectures de propulseurs à démanteler, matériaux utilisés dans le domaine de la défense notamment, la gamme s'étendant des propergols double base (SD, Epictète) aux propergols composites (butargols, isorgols) et aux propergols de nouvelles générations (XLDB, NEPE, Azorgol),
- limitation, voire suppression totale, des nuisances sonores des tirs en atmosphère (annihilation des surpressions aériennes),
- limitation, voire suppression totale, des pollutions atmosphériques (émission de NOx et d'espèces gazeuses acides, telles que l'acide chlorhydrique par exemple) engendrées par les phases de destruction par brûlage en atmosphère.
- valorisation des éléments inertes du propulseur (corps de propulseurs métalliques ou composites,...) au travers de filières de recyclage identifiées (retour en fonderie pour les métaux, recyclage des fibres de carbone et kevlar,.....)

Les caractéristiques et avantages de l'invention seront clairement présentés dans la description qui suit, description faite en regard des figures annexées qui présentent:
- la figure 1, la représentation schématique d'un corps de propulseur avec combustible à structure "moulée collée";
- la figure 2, la représentation schématique d'un corps de propulseur avec combustible à structure "libre";
- la figure 3, un organigramme schématique des étapes de la séquence principale du procédé selon l'invention;
- les figures 4 et 5, des illustrations schématiques des installations principales nécessaires à la mise en oeuvre du procédé, selon deux variantes de réalisation,
- la figure 6, un organigramme schématique d'ensemble du procédé selon l'invention, mettant en évidence ses avantages;
- la figure 7, une illustration schématique d'un exemple d'infrastructure permettant de mettre en oeuvre le procédé selon l'invention.

D'un point de vue technique général, le procédé selon l'invention consiste à faire fonctionner le propulseur à démanteler dans un milieu approprié, le milieu aquatique en l'occurrence, jusqu'à combustion complète du propergol. L'efficacité du procédé selon l'invention repose principalement sur le temps de séjour, dans un milieu aqueux, des produits de combustion dégagés par le propulseur durant son fonctionnement, le temps de séjour dans l'eau des produits de combustion étant principalement fonction de la profondeur du bassin dans lequel baigne le propulseur. Le but recherché ici est de pouvoir contenir, au sein de la structure renfermant la masse d'eau dans laquelle s'opère la combustion, une structure de type bassin par exemple, la plus grande part des espèces chimiques gazeuses (acide chlorhydrique par exemple), liquides et solides (sels organométalliques,...) générées par la combustion du propergol, la rétention de ces produits de combustion étant réalisée par différents mécanismes physico-chimiques et thermodynamiques tels que des mécanismes de dissolution, de condensation ou encore de trempe.

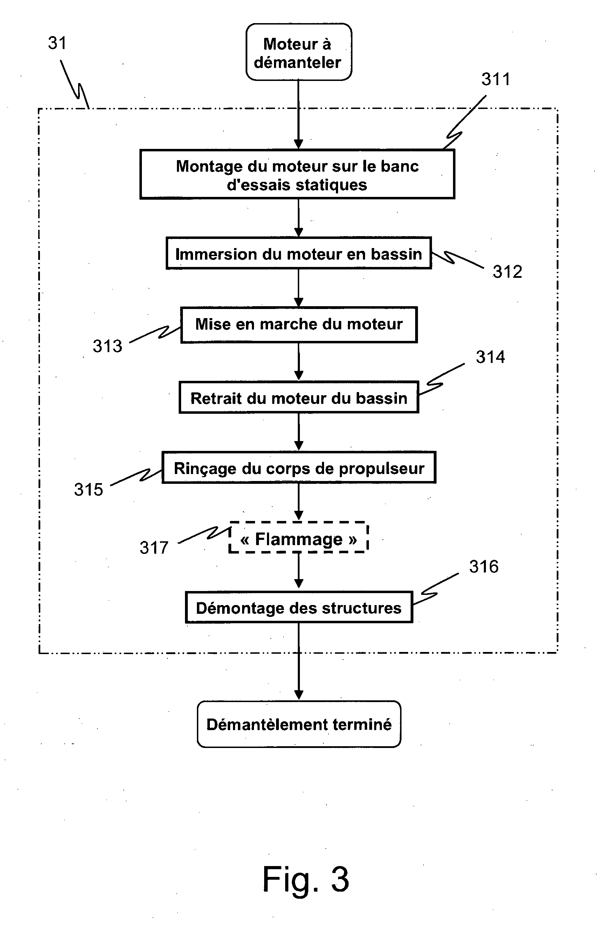

Le procédé selon l'invention met en oeuvre des séquences successives 31 de démantèlement. Comme l'illustre la figure 3, une séquence comporte, pour chaque propulseur à démanteler, les étapes principales suivantes:
Une première étape 311 consistant, le propulseur étant désolidarisé du reste de l'engin, à monter ce propulseur, équipé de son allumeur et de sa tuyère, sur un banc d'essais statiques, un banc d'essais de poussée par exemple, assurant le maintien du propulseur en position fixe durant la phase de fonctionnement,
Une deuxième étape 312 durant laquelle on immerge le banc équipé du propulseur à démanteler au fond d'un bassin rempli d'eau (bassin d'immersion);
Une troisième étape 313 de mise en service du propulseur, phase durant laquelle le propergol se consume au fond du bassin;
Une quatrième étape 314 consistant, après combustion complète du propergol, à sortir de l'eau le propulseur et à le démonter du banc d'essai;
Une cinquième étape 315 consistant à rincer le corps du propulseur pour en extraire les espèces liquides ainsi que les résidus de combustion solides qui adhèrent encore aux parois internes du propulseur;
Une sixième étape 316 consistant à démonter le corps de propulseur vide de propergol.

Selon la cadence de démantèlement imposée, la mise en oeuvre des différentes étapes peut être réalisée de différentes façons et en mettant en oeuvre des moyens variés.

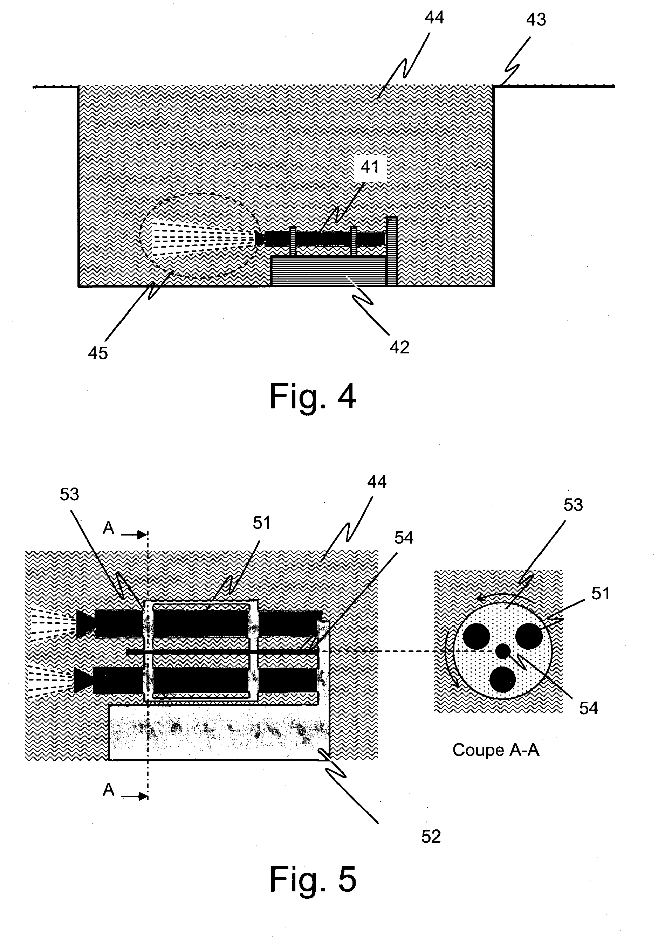

Ainsi, dans une forme de mise en oeuvre simple, illustrée par la figure 4, le procédé selon l'invention assure à chaque séquence le démantèlement d'un seul propulseur 41 à la fois. Pour ce faire il met en oeuvre une structure de support simple 42 permettant de procéder au maintien en immersion dans un bassin 43 contenant un volume d'eau approprié 44 et à la mise à feu d'un seul propulseur à la fois, de sorte que, pour chaque propulseur, l'opération de démantèlement implique une étape 312 d'immersion du propulseur 41 et de la structure support 42 puis une étape 314 de remontée de l'ensemble après combustion du chargement de propergol.

Alternativement, si la campagne de démantèlement nécessite une cadence élevée, du fait de l'urgence de ce démantèlement ou du nombre de propulseurs à démanteler par exemple, le procédé selon l'invention peut être mis en oeuvre, comme l'illustre la figure 5, de façon à démanteler plusieurs propulseurs à chaque séquence 31, en utilisant notamment une structure support appropriée, permettant d'immerger plusieurs propulseurs simultanément et de réaliser une mise à feu séquentielle de chacun des propulseurs 51 ou plus simplement la mise à feu simultanée (tir en salve) de tous les propulseurs montés sur cette structure. Une telle configuration évite ainsi avantageusement d'avoir à exécuter les étapes d'immersion 312 et de remontée 314 pour chacun des propulseurs 51 démantelés, ce qui permet d'accélérer la cadence de démantèlement.

Dans le cas d'une mise à feu séquentielle, telle qu'illustrée par la figure 5, cette structure support est par exemple constituée d'un support rigide 52, sur lequel est monté un dispositif 53 de type "barillet", pouvant accueillir plusieurs propulseurs, mobile en rotation autour d'un axe 54 aligné avec l'axe des propulseurs 51. Elle comporte également un moteur (non représenté sur la figure 5) permettant de faire tourner le barillet 53 de façon à positionner le propulseur à actionner dans la position prévue pour sa mise en marche, en position basse par exemple.

Dans le cas d'une mise à feu simultanées de tous les moteurs montés sur le support (tir en salve) en revanche, la structure peut être constituée d'un support 52 capable de supporter les contraintes exercées par plusieurs propulseurs fonctionnant simultanément.

Pour réaliser un démantèlement optimal en termes de récupération des produits de combustion, le procédé selon l'invention nécessite la mise en place d'un bassin rempli d'eau 43, dont le volume 44, et en particulier la profondeur, est fonction du débit de sortie des produits évacués pendant la combustion du propergol contenu dans un propulseur.

D'un point de vue pratique la profondeur du bassin 43 et son volume d'eau associé 44 doivent être suffisants, compte tenu des dimensions du cône de sortie 45 des produits de combustion pour, sinon empêcher complètement, du moins limiter le plus possible la remontée en surface des produits de combustion. La profondeur du bassin 43 doit en particulier être suffisante pour assurer un temps de séjour optimal des espèces générées par la combustion afin de favoriser la dissolution dans l'eau de toutes les matières et de tous les gaz solubles dans l'eau. Elle doit également être suffisante pour freiner le mouvement des produits de combustion non solubles (particules solides en particulier) et conduire ceux-ci, par phénomène de décantation à rester piégés en fond de bassin.

Dans un but identique d'optimisation de la récupération des produits de combustion, l'étape 315 de rinçage de chaque propulseur après combustion de son chargement de propergol met de préférence en oeuvre des moyens de lavage permettant la récupération des résidus de combustion arrachés ou dissouts par lavage à la paroi du propulseur.

Selon l'invention, la sixième étape 316 d'une séquence peut, si nécessaire, être précédée d'une étape complémentaire optionnelle 317 consistant en l'exposition à une flamme des corps de propulseur démontés, de façon à achever le nettoyage des éléments de parois du propulseur de tout résidu de matériau de combustion et à garantir la décontamination (au sens pyrotechnique) complète des structures, des structures métalliques en particulier, avant de procéder au stockage puis à l'envoi en recyclage vers des filières identifiées.

D'un point de vue opérationnel, une phase de démantèlement d'un stock de propulseurs à propergol solide consiste à mettre en oeuvre la séquence de démantèlement 31 autant de fois qu'il est nécessaire pour démanteler l'ensemble du stock. Par suite le procédé selon l'invention consiste principalement à réaliser une pluralité d'itérations de la séquence 31. Cependant, dans la mesure où le volume d'eau contenu dans le bassin se charge progressivement de produits de combustion dissouts et que le fond du bassin se charge d'éléments insolubles, il est nécessaire, après un certain nombre d'itérations de nettoyer le fond du bassin et de reconditionner l'eau qui y est contenue.

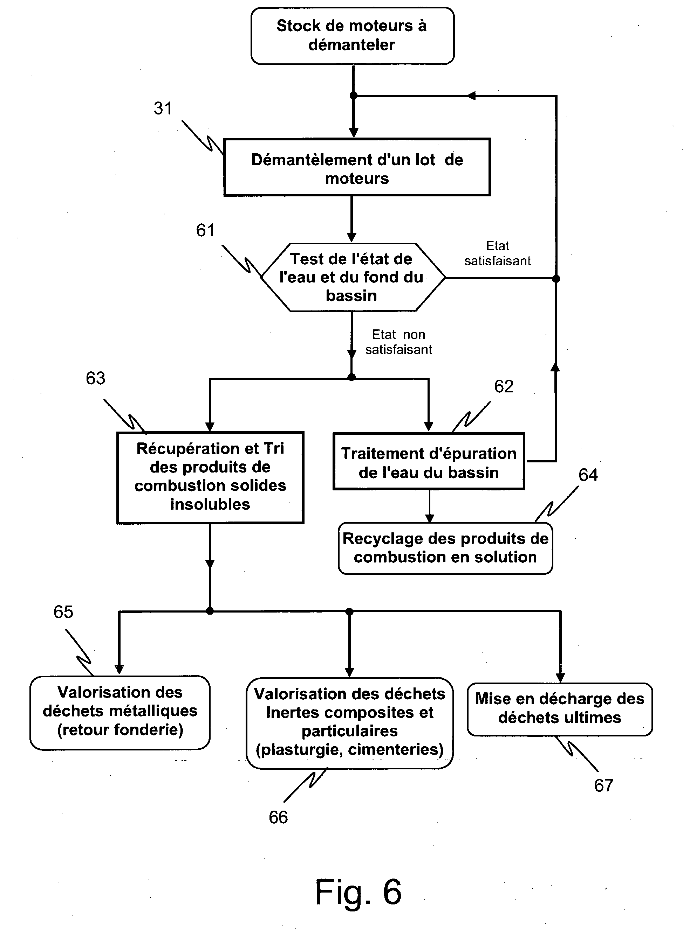

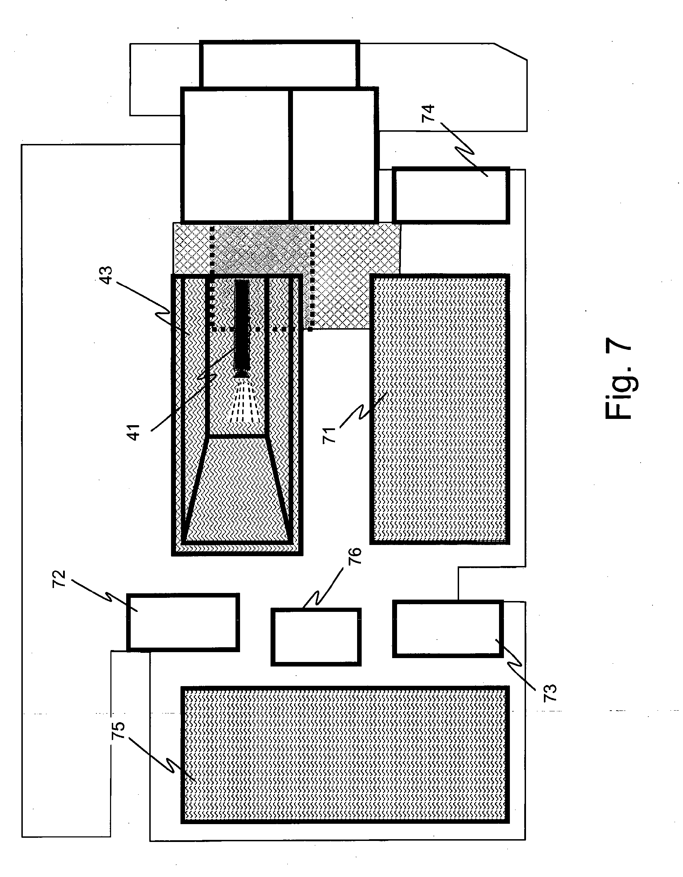

C'est pourquoi le procédé selon l'invention peut être décrit, comme illustré par la figure 6, comme l'alternance de groupes de séquences 31 chaque groupe étant séparé du suivant par une étape 61 de contrôle de la teneur de l'eau du bassin en composés chimiques dissouts et de la quantité de résidus solides présents au fond du bassin. Selon le résultat du contrôle un groupe de séquences de démantèlement 31 peut être suivi par le groupe suivant ou séparé de celui-ci par une opération de maintenance comportant plusieurs opérations:
- une opération 62 de traitement (régénération) de l'eau contenue dans le bassin, régénération ayant pour fonction de récupérer les éléments dissouts dans l'eau au cours des séquences successives de démantèlement 31. L'opération 62 consiste principalement à réaliser une stabilisation (neutralisation du pH du type tamponnage) de l'eau du bassin d'immersion 43. Comme l'illustre l'exemple d'infrastructure de la figure 7, cette opération peut être réalisée au moyen de soude caustique délivrée par un réservoir 72, l'eau stabilisée étant ensuite renvoyée périodiquement, au moyen d'un réseau de canalisations et de pompes 76 dédiées à cet usage, vers un deuxième bassin de stockage 71 au sein duquel certaines espèces solides, moyennent une durée d'attente suffisante pourront être décantées. La périodicité est notamment fonction de la cadence de destruction.

A la suite d'un tel transfert, et afin de procéder aux séquences de démantèlement suivantes, il est alors procédé au transfert d'une réserve d'eau "propre", contenue dans un bassin 75, vers le bassin de tir 43. Par eau "propre" on entend ici une eau recyclée, c'est-à-dire débarrassée le plus possible des produits de combustion dissouts au cours d'une utilisation précédente. On assiste ainsi de manière périodique, au cours du déroulement des différentes séquences de démantèlement, à l'exécution de séquences consistant chacune à réaliser la vidange du bassin 43 dans le bassin 71, du bassin 71 dans le bassin 75 et du bassin 75 dans le bassin 43. Ces séquences de vidange et de remplissage sont ainsi répétées jusqu'à ce que les analyses faites sur les trois bassins 43, 71 et 75 mettent en évidence la nécessité de procéder à un renouvèlement complet (par pompage) de l'eau utilisée, le renouvellement complet ayant lieu, a priori, une fois par an. L'eau alors récupérée fait elle-même l'objet d'un retraitement via des filières adaptées, tandis qu'une eau "propre" est alors employée pour remplir les bassins 43 et 75.
- une opération 63 de récupération et de séparation des produits de combustion solides présents au fond des bassins 43 et 71, produits qui se sont, sous l'effet de la gravité, accumulés au fond des bassins au cours des séquences successives de démantèlement 31. Ces produits sont ainsi évacués périodiquement vers un bassin de stockage tampon 73. Ces déchets sont ensuite séparés et recyclés de manière appropriée. Ils font l'objet soit d'opérations 65 ou 66 de valorisation en ce qui concerne les produits recyclables, soit d'une mise en décharge 67 pour les déchets ultimes non recyclables.

Ainsi, les éléments métalliques sont, par exemple, recyclés en fonderie pour la production de nouvelles pièces métalliques, tandis que les éléments structuraux en matériaux composites peuvent, selon leur degré de toxicité, soit subir des cycles de traitement postérieurs visant à récupérer les fibres (carbone, kevlar) pour la production de composites basses performances ou de matières plastiques chargées ou pour la production de ciment, soit traités comme des déchets ultimes.

Il est à noter que l'étape de contrôle 61 peut se résumer à un simple comptage du nombre de séquences de démantèlement exécutées, le test consistant alors à déterminer si ce nombre atteint un nombre de séquences, fixé a priori, au-delà duquel on considère qu'il est nécessaire de mettre en oeuvre les opérations 62 et 63. Suivant la cadence des opérations de démantèlement réalisées, les opérations 62 et 63 sont ainsi réalisées de façon plus ou moins fréquente, mensuellement par exemple.

Le tableau 1 illustre, au travers d'observations réalisées lors du démantèlement et de la destruction de propulseurs à propergol solide de type composite dans un bassin tel que décrit précédemment, le comportement des différents produits de combustion liquides et gazeux qui apparaissent durant la mise en oeuvre du procédé selon l'invention.

**Tableau 1 : Exemple d'espèces chimiques générées lors d'un tir en piscine pour un propergol solide du type butargol 68/18.**

| **Espèces chimiques dégagées** | | **Etats** | **Fractions massiques présents dans les gaz de combustion** | **Mécanismes observés au cours du traitement** |
|---|---|---|---|---|
| **Abréviation** | **Dénomination** | | | |
| CO | Monoxyde de carbone | Gazeux | 21,2 % | Pas de réaction au contact de l'eau du bassin. Remonte à la surface et est évacué sous forme gazeuse. |
| CO₂ | Dioxyde de carbone | Gazeux | 2,8 % | Espèce soluble dans l'eau. Le temps de séjour amène à la transformation du CO2 en acide carbonique HCO3- |
| HCl | Acide chlorhydrique | Gazeux | 20,2 % | Espèce très soluble dans l'eau. Transformation à l'état liquide au sein du bassin |
| H2 | Hydrogène | Gazeux | 2,1 % | Espèce non soluble dans l'eau. Remonte à la surface et est évacuée sous forme gazeuse. |
| H₂O | Eau | Gazeux | 9,4 % | Espèce gazeuse qui se condense sous la forme liquide au sein du bassin |
| N₂ | Azote | Gazeux | 8,3 % | Espèce non soluble dans l'eau. Ne se recombine pas avec l'oxygène atmosphérique à la surface du bassin |
| Al₂O₃ | Alumine | Liquide | 34 % | Espèce condensée sous la forme solide au contact de l'eau. Piégée par décantation au fond du bassin |
| FeCl₂ | Chlorure ferreux | Liquide | 1,5 % | Espèce soluble dans l'eau. Reste piégée dans le bassin de traitement. |

Il est à noter que, comme on peut le constater à la lecture du tableau 1, certaines espèces gazeuses ne subissent aucune transformation lors de leur passage dans l'eau, de sorte qu'elles remontent en surface et s'évacuent dans l'atmosphère. Les espèces gazeuses ne subissant aucune transformation présentent potentiellement un danger pour d'éventuels opérateurs. Par ailleurs, leur rejet dans l'atmosphère est sujet à règlementation qui fixe le seuil maximum de rejet hebdomadaire autorisé, règlementation matérialisée par les arrêtés préfectoraux relatifs à l'exploitation du site industriel considéré dans lequel le procédé est mis en oeuvre. C'est pourquoi dans une forme de mise en oeuvre préférée, le procédé selon l'invention est réalisé avec un bassin au dessus duquel sont mis en place des moyens d'aspiration (hotte aspirante) qui permettent de récupérer ces espèces gazeuses et de les traiter par traitement catalytique.

Par suite, dans cette forme de mise en oeuvre, l'étape 313 de mise en marche d'un propulseur en vue de le vider de son propergol comporte aussi la mise en marche de ces moyens d'aspiration. Les moyens d'aspiration sont mis en marche avant la mise en marche du propulseur monté sur le banc d'essais (ou du premier propulseur mis en marche si le banc loge plusieurs propulseurs) et sont mis à l'arrêt après que le propulseur a consumé tout son propergol (ou après que le dernier propulseur mis en marche a consumé tout son propergol).

## Revendications

1. Procédé pour réaliser le démantèlement de propulseurs à propergol solide, **caractérisé en ce que** l'on procède pour chaque propulseur (41) à la mise en marche du propulseur de façon à consumer la totalité du propergol qu'il renferme, puis au démontage de la structure proprement dite du corps du propulseur, la mise en marche du propulseur (41) et la combustion du propergol étant réalisées alors que le propulseur (41) est monté sur un banc d'essais statiques (42) et immergé dans un bassin (43) rempli d'eau (44).

2. Procédé selon la revendication 1, **caractérisé en ce qu'**il met en oeuvre de manière répétitive une séquence principale (31) comportant les étapes suivantes:
Une première étape (311) consistant à monter un propulseur (41) sur un banc d'essais statiques (42) assurant le maintien du propulseur en position fixe;
Une deuxième étape (312) durant laquelle on immerge le banc d'essais statiques (42), équipé du propulseur (41) à démanteler, au fond d'un bassin (43) rempli d'eau (44);
Une troisième étape (313) de mise en service du propulseur (41, 51), durant laquelle le propergol se consume au fond du bassin;
Une quatrième étape (314) consistant, après combustion complète du propergol, à sortir de l'eau le banc d'essais statiques (42) et à démonter le propulseur (41) du banc d'essai (42);
Une cinquième étape (315) consistant à rincer le corps du propulseur pour en extraire les résidus de combustion solides qui adhèrent encore aux parois internes du corps du propulseur;
Une sixième étape (316) consistant à démonter le corps du propulseur vide de propergol.

3. Procédé selon la revendication 1, **caractérisé en ce que**, le banc d'essai utilisé permettant de loger plusieurs propulseurs, il met en oeuvre de manière répétitive une séquence principale (31) comportant les étapes suivantes:
Une première étape (311) consistant à monter des propulseurs (51) sur le banc d'essais statiques (52);
Une deuxième étape (312) durant laquelle on immerge le banc d'essais statiques (52), équipé des propulseurs (51) à démanteler, au fond d'un bassin (43) rempli d'eau (44);
Une troisième étape (313) de mise en marche des propulseurs (51), les propulseurs étant mis en marche simultanément ou l'un après l'autre;
Une quatrième étape (314) consistant, après mise en marche de l'ensemble des propulseurs (51) montés sur le banc d'essais statiques (52), à sortir le banc d'essais statiques de l'eau et à démonter les propulseurs (51) du banc d'essai (52);
Une cinquième étape (315) consistant à rincer le corps de chaque propulseur pour en extraire les résidus de combustion solides qui peuvent encore y adhérer;
Une sixième étape (316) consistant à démonter les corps de propulseurs vides de propergol.

4. Procédé selon la revendication 3, **caractérisé en ce qu'**il met en oeuvre un banc d'essais statiques (52) comportant un dispositif type barillet (53) permettant de loger plusieurs propulseurs et d'exécuter une mise en marche séquentielle des propulseurs montés sur le banc d'essais statiques (52).

5. Procédé selon l'une quelconque des revendications 2 à 4, **caractérisé en ce qu'**on exécute de manière répétitive la séquence de démantèlement (31), de façon à démanteler l'ensemble des propulseurs dont le démantèlement est requis; chaque exécution de la séquence principale (31) étant suivie d'un test (61) consistant à déterminer si la teneur de l'eau du bassin (44) en produits de combustion et la quantité de produits de combustion insolubles déposés au fond du bassin (43) permettent d'exécuter une nouvelle séquence de démantèlement (31).

6. Procédé selon la revendication 5, **caractérisé en ce que**, dans le cas où le test (61) est négatif, on exécute une étape (63) de récupération et de tri des produits insolubles déposés au fond du bassin (43) ainsi qu'une étape (62) de traitement d'épuration de l'eau du bassin.

7. Procédé selon la revendication 6, **caractérisé en ce que** une étape (63) de récupération et de tri des produits insolubles est suivie d'opérations (65, 66 et 67) de recyclage de ces produits et que l'étape (62) de traitement d'épuration de l'eau du bassin est suivie d'une opération (64) de recyclage des produits en solution.

8. Procédé selon l'une quelconque des revendications revendication 2 à 6, **caractérisé en ce que**, le bassin d'immersion (43) étant associé à des moyens d'aspiration d'air disposés au dessus de la surface libre de l'eau du bassin (44), l'étape (313) de mise en marche des propulseurs (51), assure également la mise en marche des moyens d'aspiration, ces moyens étant mis à l'arrêt après l'arrêt de fonctionnement du dernier propulseur durant cette étape (313).

## Patentansprüche

1. Verfahren zum Zerlegen von Festtreibstoffmotoren, **dadurch gekennzeichnet, dass** jeder Motor (41) in Betrieb gesetzt wird, um den gesamten darin enthaltenen Treibstoff zu verbrauchen, dann die eigentliche Struktur des Motorgehäuses demontiert wird, wobei der Motor (41) in Betrieb gesetzt und der Treibstoff verbrannt wird, während der Motor (41) auf einem statischen Prüfstand (42) montiert und in ein mit Wasser (44) gefülltes Becken (43) eingetaucht ist.

2. Verfahren nach Anspruch 1, **dadurch gekennzeichnet, dass** wiederholt eine Hauptsequenz (31) durchgeführt wird, die die folgenden Schritte beinhaltet:
einen ersten Schritt (311) des Montierens eines Motors (41) an einem statischen Prüfstand (42), in dem der Motor festgehalten werden kann;
einen zweiten Schritt (312), bei dem der statische Prüfstand (42), mit dem zu zerlegenden Motor (41) versehen, bis auf den Boden eines mit Wasser (44) gefüllten Beckens (43) eingetaucht wird;
einen dritten Schritt (313) des Inbetriebnehmens des Motors (41, 51), bei dem der Treibstoff am Boden des Beckens verbraucht wird;
einen vierten Schritt (314) des Herausnehmens, nach dem vollständigen Verbrennen des Treibstoffs, des statischen Prüfstands (42) aus dem Wasser und des Abmontierens des Motors (41) von dem Prüfstand (42);
einen fünften Schritt (315) des Spülens des Gehäuses des Motors, um die festen Verbrennungsrückstände zu entfernen, die noch an den Innenwänden des Motorgehäuses haften;
einen sechsten Schritt (316) des Demontierens des treibstofffreien Motorgehäuses.

3. Verfahren nach Anspruch 1, **dadurch gekennzeichnet, dass**, da der benutzte Prüfstand mehrere Motoren aufnehmen kann, eine Hauptsequenz (31) bestehend aus den folgenden Schritten wiederholt ausgeführt wird:
einen ersten Schritt (311) des Montierens von Motoren (51) an dem statischen Prüfstand (52);
einen zweiten Schritt (312), bei dem der statische Prüfstand (52), mit dem zu zerlegenden Motor (51) versehen, bis auf den Boden eines mit Wasser (44) gefüllten Beckens (43) eingetaucht wird;
einen dritten Schritt (313) des Inbetriebnehmens des Motors (51), wobei die Motoren gleichzeitig oder nacheinander in Betrieb genommen werden;
einen vierten Schritt (314) des Herausnehmens, nach dem Inbetriebnehmen des Satzes von an dem statischen Prüfstand (52) montierten Motoren (51), des statischen Prüfstands aus dem Wasser und des Abmontierens der Motoren (51) von dem Prüfstand (52);
einen fünften Schritt (315) des Spülens des Gehäuses jedes Motors, um die festen Verbrennungsrückstände zu entfernen, die noch daran haften können;
einen sechsten Schritt (316) des Demontierens der treibstofffreien Motorgehäuse.

4. Verfahren nach Anspruch 3, **dadurch gekennzeichnet, dass** ein statischer Prüfstand (52) in Betrieb gesetzt wird, der eine Vorrichtung (53) des Revolvertyps umfasst, die mehrere Motoren aufnehmen kann und an der nacheinander die an dem statischen Prüfstand (52) montierten Motoren in Betrieb gesetzt werden können.

5. Verfahren nach einem der Ansprüche 2 bis 4, **dadurch gekennzeichnet, dass** die Zerlegungssequenz (31) wiederholt so ausgeführt wird, dass der Satz von zu zerlegenden Motoren zerlegt wird; wobei auf jede Ausführung der Hauptsequenz (31) ein Test (61) folgt, der darin besteht zu ermitteln, ob der Gehalt an Verbrennungsprodukten im Wasser des Beckens (44) und die Menge an unlöslichen Verbrennungsprodukten am Boden des Beckens (43) die Ausführung einer neuen Zerlegungssequenz (31) zulassen.

6. Verfahren nach Anspruch 5, **dadurch gekennzeichnet, dass**, falls der Test (61) negativ ist, ein Schritt (63) des Zurückgewinnens und des Sortierens von am Boden des Beckens (43) abgesetzten unlöslichen Produkten sowie ein Schritt (62) einer Läuterungsbehandlung des Wassers des Beckens ausgeführt werden.

7. Verfahren nach Anspruch 6, **dadurch gekennzeichnet, dass** auf einen Schritt (63) des Rückgewinnens und Sortierens von unlöslichen Produkten Operationen (65, 66 und 67) des Recycelns dieser Produkte folgt und dass auf den Schritt (62) der Läuterungsbehandlung des Wassers des Beckens eine Operation (64) des Recycelns der gelösten Produkte folgt.

8. Verfahren nach einem der Ansprüche 2 bis 6, **dadurch gekennzeichnet, dass**, da das Tauchbecken (43) mit Luftansaugmitteln assoziiert ist, die über der freien Fläche des Wassers des Beckens (44) angeordnet sind, der Schritt (313) des Inbetriebnehmens der Motoren (51) auch das Betreiben der Ansaugmittel gewährleistet, wobei diese Mittel nach dem Stoppen des Betriebs des letzten Motors bei diesem Schritt (313) gestoppt werden.

## Claims

1. A method for dismantling solid propellant engines, **characterized in that**, for each engine (41), the engine is started so as to use up all of the propellant that it contains, then the actual structure of the engine body is taken apart, the engine (41) being started and the propellant being combusted while the engine (41) is mounted on a static test rig (42) and immersed in a tank (43) filled with water (44).

2. The method as claimed in claim 1, **characterized in that** it repetitively implements a main sequence (31) having the following steps:
A first step (311) which consists in mounting an engine (41) on a static test rig (42) that holds the engine in a fixed position;
A second step (312) during which the static test rig (42), equipped with the engine (41) to be dismantled, is immersed at the bottom of a tank (43) filled with water (44);
A third step (313) of turning on the engine (41, 51), during which the propellant is used up at the bottom of the tank;
A fourth step (314) which consists, after complete combustion of the propellant, in removing the static test rig (42) from the water and dismounting the engine (41) from the test rig (42);
A fifth step (315) which consists in rinsing the body of the engine so as to extract the solid combustion residues which still adhere to the internal walls of the body of the engine;
A sixth step (316) which consists in taking apart the body of the engine emptied of propellant.

3. The method as claimed in claim 1, **characterized in that**, with the test bank used being able to accommodate a number of engines, it repetitively implements a main sequence (31) having the following steps:
A first step (311) which consists in mounting engines (51) on the static test rig (52);
A second step (312) during which the static test rig (52), equipped with the engines (51) to be dismantled, is immersed at the bottom of a tank (43) filled with water (44);
A third step (313) of starting the engines (51), the engines being started simultaneously or one after another;
A fourth step (314) which consists, after all of the engines (51) mounted on the static test rig (52) have been started, in removing the static test rig from the water and dismounting the engines (51) from the test rig (52);
A fifth step (315) which consists in rinsing the body of each engine in order to extract the solid combustion residues which may still adhere thereto;
A sixth step (316) which consists in taking apart the bodies of the engines emptied of propellant.

4. The method as claimed in claim 3, **characterized in that** it employs a static test rig (52) having a barrel-type device (53) for accommodating a plurality of engines and for sequentially starting the engines mounted on the static test rig (52).

5. The method as claimed in any one of claims 2 to 4, **characterized in that** the dismantling sequence (31) is carried out repetitively so as to dismantle all of the engines for which dismantling is required; each operation of carrying out the main sequence (31) being followed by a test (61) which consists in determining whether the content of combustion products in the water (44) in the tank and the quantity of insoluble combustion products located at the bottom of the tank (43) allow a new dismantling sequence (31) to be carried out.

6. The method as claimed in claim 5, **characterized in that**, if the test (61) is negative, a step (63) of recovering and screening insoluble products located at the bottom of the tank (43) and also a step (62) of carrying out a purification treatment of the water in the tank are carried out.

7. The method as claimed in claim 6, **characterized in that** a step (63) of recovering and screening insoluble products is followed by operations (65, 66 and 67) of recycling these products and **in that** the step (62) of carrying out a purification treatment of the water in the tank is followed by an operation (64) of recycling the products in solution.

8. The method as claimed in any one of claims 2 to 6, **characterized in that**, with the immersion tank (43) being connected to air suction means located above the free surface of the water (44) in the tank, the step (313) of starting the engines (51) also involves starting the suction means, these means being stopped after the operation of the last engine is stopped during this step (313).
